# EUROPÄISCHE PATENTSCHRIFT

(11) **EP 2 004 474 B1**
(45) Veröffentlichungstag und Bekanntmachung des Hinweises auf die Patenterteilung: **11.08.2010**
(21) Anmeldenummer: 07726901.7
(22) Anmeldetag: 14.03.2007
(51) Int. Cl.: B62D 5/04

(54) **SCHNECKEN-RIEMEN-GETRIEBE EINES LENK-HILFSANTRIEBS**
WORM/BELT MECHANISM OF A POWER STEERING DRIVE
TRANSMISSION A COURROIE ET VIS SANS FIN D'UNE DIRECTION ASSISTEE

(30) Priorität: 07.04.2006 DE 102006016429
(43) Veröffentlichungstag der Anmeldung: 24.12.2008
(73) Patentinhaber: ZF Lenksysteme GmbH, 73527 Schwäbisch Gmünd (DE)
(72) Erfinder: LEUTNER, Wilfried, 73527 Schwäbisch Gmünd (DE)
(86) Internationale Anmeldenummer: PCT/EP2007/052410
(87) Internationale Veröffentlichungsnummer: WO 2007/115891

(56) Entgegenhaltungen:
- EP-A1- 1 470 988
- EP-A2- 1 308 368
- DE-A1- 10 123 767
- JP-A- 2001 018 822
- JP-A- 2001 186 790
- JP-A- 2002 223 600
- JP-A- 2002 247 899
- JP-A- 2004 338 553
- JP-A- 2005 349 861

## Beschreibung

Die Erfindung betrifft einen Lenk-Hilfsantrieb gemäß dem Oberbegriff des Anspruchs 1 sowie ein Verfahren zum Justieren des Getriebes eines Lenk-Hilfsantriebs gemäß dem Oberbegriff des Anspruches 9.

Es sind Lenk-Hilfsantriebe mit Riemengetriebe, wie zum Beispiel in der DE 100 52 275 A1 beschrieben, bekannt. Nachteilig bei den bekannten Lenk-Hilfsantrieben ist die begrenzte, maximal mögliche Getriebeübersetzung, da der zur Verfügung stehende Einbauraum begrenzt ist. Bei sehr großen Übersetzungen müsste die angetriebene Riemenscheibe so groß gewählt werden, dass kaum eine Chance für den Einbau in einem Kraftfahrzeug besteht. Ein großes Übersetzungsverhältnis ist jedoch wünschenswert, wenn man große Servomomente mit relativ kleinen Elektromotoren realisieren möchte.

Aus der DE 101 23 767 A1 ist bekannt, Lenk-Hilfsantriebe mit Schneckengetrieben einzusetzen. Dabei ist die Schnecke mit der Motorwelle gekoppelt. Die Schnecke treibt ein drehfest mit der Lenkwelle verbundenes Schneckenrad an. Zur Vermeidung störender Geräusche wird die Schnecke zum Schneckenrad durch alleiniges Verstellen einer Zwischenwelle relativ zur Motorwelle und der Abtriebswelle eingestellt. Das Schneckengetriebe ist ebenfalls in der Übersetzung begrenzt, da ansonsten die Wirkungsgrade für Eindrehen und/oder Rückdrehen zu ungünstig werden.

Die in der JP 2004 338553 A beschriebene Servolenkung weist einen eine Motorwelle antreibenden Motor und ein zwischen Motorwelle und Abtriebswelle angeordnetes Getriebe auf, wobei das Getriebe als kombiniertes Schnecken- Riemengetriebe ausgebildet ist, wodurch sich bei kleinem Bauraum große Übersetzungsverhältnisse realisieren lassen. Das Gesamtübersetzungsverhältnis ergibt sich dabei durch die Multiplikation des Übersetzungsverhältnisses des Schneckengetriebeabschnittes mit dem Übersetzungsverhältnis des Riemengetriebeabschnittes. Es können kleine und damit kostengünstige Motoren eingesetzt werden. Der Nachteil ist, dass solche kombinierten Getriebe nur sehr aufwändig justiert werden können.

In der JP 2005 349861 A wird ein Verfahren zur Justierung eines Getriebes einer Servolenkung, mit einer Motorwelle, einer Abtriebswelle und einer zwischen diesen Wellen liegenden Schnecke beschrieben, wobei die Justierung durch Verstellen der Wellen zueinander erfolgt.

Der Erfindung liegt die Aufgabe zugrunde, einen Lenk-Hilfsantrieb mit kombinierten Schnecken-Riemen-Getriebe vorzuschlagen, welches auf eine einfache und kostengünstige Weise justiert werden kann. Diese Aufgabe wird vorrichtungsgemäß mit den Merkmalen des Anspruchs 1 und verfahrensgemäß mit den Merkmalen des Anspruches 9 gelöst.

Vorteilhafte Weiterbildungen der Erfindung sind in den Unteransprüchen angegeben.

Der Lenk-Hilfsantrieb für eine Lenkung in einem Kraftfahrzeug umfasst einen eine Motorwelle antreibenden Motor und ein zwischen Motorwelle und einer Abtriebswelle angeordnetes kombiniertes Schnecken-Riemen-Getriebe.

Bei der Abtriebswelle des Lenk-Hilfsantriebs handelt es sich bevorzugt um eine Lenkwelle der Lenkung oder um die Eingangswelle eines Lenkgetriebes, insbesondere einer Zahnstangenlenkung.

Erfindungsgemäß ist vorgesehen, dass das Getriebe des erfindungsgemäßen Lenk-Hilfsantriebs zusätzlich zur Motorwelle und zur Abtriebswelle eine verstellbare Zwischenwelle aufweist, die als Getriebeschnecke ausgebildet ist.

Die Zwischenwelle ist mit der Motorwelle über einen Riemen gekoppelt, wobei der Riemen auf eine drehfest auf der Motorwelle sitzende erste Riemenscheibe und auf eine drehfest auf der Zwischenwelle sitzende zweite Riemenscheibe aufgespannt ist.

In Weiterbildung der Erfindung kämmt die Zwischenwelle bzw. der Schneckenabschnitt der Zwischenwelle mit einem drehfest auf der Abtriebswelle, insbesondere der Lenkwelle, angeordneten Schneckenrad.

Mit Vorteil ist vorgesehen, dass die Zwischenwelle parallel zur Motorwelle angeordnet ist und die Abtriebswelle quer zu der Zwischenwelle und der Motorwelle verläuft.

Erfindungsgemäß ist vorgesehen, dass vorzugsweise ausschließlich die Zwischenwelle in ihrer Relativposition zur Motorwelle und/oder zur Abtriebswelle verstellbar ist. Nach Lösen einer Fixierung der Zwischenwelle ist es möglich, die Zwischenwelle zu verstellen, wodurch die gewünschte Riemenspannung aufgebracht und/oder die gewünschte Relativposition zwischen Schnecke und Schneckenrad, insbesondere in einem Arbeitsschritt, einstellbar ist. Das gesamte Getriebe kann durch Verschieben nur eines Elements, hier der Zwischenwelle, bevorzugt mittels eines externen Wellenverschiebewerkzeugs, insbesondere durch Aufbringen einer definierten Verstellkraft in eine definierte Kraftrichtung justiert werden. Dabei ist die Zwischenwelle bzw. das die Zwischenwelle tragende Bauteil bevorzugt mit vollumfänglichem Radialspiel in mindestens einer Ausnahmeöffnung aufgenommen bzw. durch diese hindurchgeführt. Falls die Justage mittels eines externen Wellenverschiebewerkzeugs erfolgt, kann auf in den Lenk-Hilfsantrieb integrierte Einstellhilfen verzichtet werden. Selbstverständlich ist es auch denkbar, solche Einstellhilfen, wie beispielsweise Verstellschrauben und/oder federkraftunterstützten Spannrollen vorzusehen. Wenn die Zwischenwelle nach Lösen einer Fixierung verschiebbar angeordnet ist, können in Weiterbildung der Erfindung die Motorwelle und die Abtriebswelle in einer festen, nicht verstellbaren Relativposition zueinander in dem Lenk-Hilfsantrieb angeordnet werden, wodurch insgesamt die notwendigen baulichen Maßnahmen wesentlich verringert werden, da auf entsprechende Verstelleinrichtungen und Fixiereinrichtungen verzichtet werden kann.

Es ist möglich, die in die exakte Position verbrachte Zwischenwelle beispielsweise durch Verschweißen, Umbiegen von Blechteilen, Verklemmen oder Verschrauben in der gewünschten Position zu fixieren. Bevorzugt erfolgt die Fixierung der Zwischenwelle jedoch ausschließlich durch axiales Verspannen mit mindestens einem Bauteil, insbesondere einem Bauteil des Lenk-Hilfsantriebs, vorzugsweise mit einem Gehäuse. Auf eine unmittelbare Abstützung in radialer Richtung kann mit Vorteil verzichtet werden. Es gibt verschiedene Möglichkeiten, die Zwischenwelle rotierbar zu lagern. Gemäß einer ersten Alternative ist vorgesehen, dass die Zwischenwelle rotierbar auf eine Achse gelagert ist. Insbesondere ist diese Achse mittels der Fixiermittel axial gegen ein Bauteil verspannt. Dabei ist die Achse bevorzugt durch mindestens eine Öffnung mit vollumfänglichem Radialspiel geführt, so dass die Achse und damit die Zwischenwelle bei gelöster Axialverspannung in radialen Richtungen in den durch den Öffnungsrand vorgegebenen Grenzen verschiebbar ist. Es ist möglich, die Achse lediglich einseitig oder auf beiden Seiten mit einem Bauteil zu verspannen.

Gemäß einer Alternative ist die Zwischenwelle radial innerhalb eines Wellenlagers aufgenommen. Das Wellenlager wiederum oder eine drehfest mit dem Wellenlagergehäuse verbundene Achse ist in axialer Richtung mit einem Bauteil oder mit mehreren Bauteilen verspannbar. Dabei ist bevorzugt rund um das Wellenlager bzw. die Achse ein Radialspiel vorgesehen, um die Zwischenwelle mit Wellenlager bei gelösten Fixiermitteln in einer Radialebene verstellen und damit den mindestens einen Riemen vorspannen und/oder die Relativposition zwischen Schnecke und Schneckenrad verstellen zu können.

Weiterhin betrifft die Erfindung ein Verfahren zur Justierung des Getriebes eines Lenk-Hilfsantriebs für ein Kraftfahrzeug, wobei der Lenk-Hilfsantrieb eine Motorwelle, eine als Schnecke ausgebildete Zwischenwelle und eine Abtriebswelle aufweist. Erfindungsgemäß ist vorgesehen, dass die Justage des Getriebes, das heißt das Vorspannen des Riemengetriebeabschnitts und/oder die Änderung der Relativposition zwischen Schnecke und Schneckenrad durch alleiniges Verstellen der als Schnecke ausgebildeten Zwischenwelle vorgenommen werden.

Gemäß einer ersten Alternative erfolgt das Verstellen der Zwischenwelle mit einer definierten, vorgegebenen Verstellkraft in eine definierte Kraftrichtung. Dabei wird die momentan anliegende Verstellkraft bevorzugt mittels mindestens eines Sensors während des Verstellvorgangs gemessen. Mit Vorteil erfolgt die Verstellung mittels einer eigenständigen Wellenverschiebevorrichtung, die nicht Teil des Lenk-Hilfsantriebes ist und die bevorzugt an zwei in axialer Richtung beabstandeten Anlageabschnitten, jedoch mindestens einem Anlageabschnitt, an der Zwischenwelle oder einem fest mit der Zwischenwelle verbundenen Bauteil angreift und bevorzugt elektromotorisch betrieben ist. Dabei erfolgt die Einstellung der Riemenspannung nicht durch Verstellen eines vorgegebenen Weges, sondern durch Aufbringen einer definierten Verstellkraft. Wird die zu verstellende Zwischenwelle mit einer definierten Verstellkraft beaufschlagt, so resultiert hieraus eine definierte Vorspannkraft des oder der mit der Zwischenwelle verbundenen Riemen. Ein Messen der Riemenspannung während und nach der Justage erübrigt sich. Bevorzugt wird lediglich die anliegende Verstellkraft in der gewünschten Kraftrichtung gemessen.

Gemäß einer zweiten Alternative erfolgt die Einstellung der Riemenspannung und/oder der Relativposition zwischen Zwischenwelle mit Schneckenabschnitt und Schneckenrad über die Verstellung um einen Weg. Wird die Riemenspannung über eine Wegverstellung eingestellt, ist die Riemenspannung während des Verstellvorgangs zu messen. Insbesondere eignet sich die Verstellung um einen Weg zur Einstellung der Relativposition zwischen Zwischenwelle mit Scheckenabschnitt und Schneckenrad. Dabei wird die Zwischenwelle mit Schneckenabschnitt relativ zum Schneckenrad verstellt, beispielsweise in Richtung Schneckenrad, bis die Kraft in Verstellrichtung ansteigt. Das Ansteigen der Kraft ist ein Indikator für das Anliegen des Schneckenabschnitts der Zwischenwelle an dem Schneckenrad. Nachdem das Anliegen an dem Schneckenrad festgestellt wurde, kann die Zwischenwelle um einen bestimmten Weg zurück verstellt werden, um ein definiertes Spiel zwischen Zwischenwelle, bzw. Schneckenabschnitt und Schneckenrad zu erhalten.

Weitere Einzelheiten und Vorteile der Erfindung ergeben sich aus der nachfolgenden Figurenbeschreibung und den beigefügten Zeichnungen, in denen mehrere Ausführungsformen beispielhaft veranschaulicht sind. In den Zeichnungen zeigen:
- Fig. 1: eine schematische Darstellung eines erfindungsgemäßen Lenk-Hilfsantriebs mit einer als Schnecke ausgebilde- ten Zwischenwelle, und
- Fig. 2: eine um 90° gedrehte, entlang der Schnittlinie A-A gemäß Fig. 1 geschnittene Darstellung des Lenk- Hilfsantriebs.

In den Figuren sind gleiche Bauteile und Bauteile mit gleicher Funktion mit den gleichen Bezugszeichen gekennzeichnet.

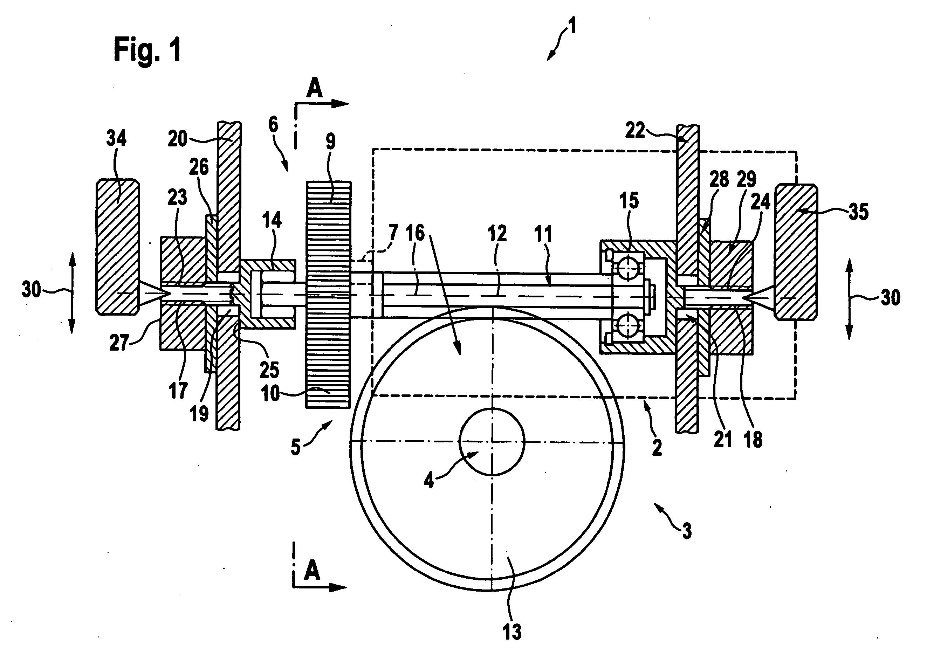

In Fig. 1 ist ein Lenk-Hilfsantrieb 1 für eine nicht näher dargestellte Lenkung in einem Kraftfahrzeug dargestellt. Mithilfe des Lenk-Hilfsantriebs 1 kann die vom Fahrer aufgebrachte Lenkkraft unterstützt werden. Hierzu wird das von einem Elektromotor 2 bereitgestellte Drehmoment über ein Getriebe 3 auf eine Abtriebswelle 4, also eine Lenkwelle, übertragen.

Das Getriebe 3 besteht aus einem Schneckengetriebeabschnitt 5 und einem Riemengetriebeabschnitt 6. Der Riemengetriebeabschnitt 6 umfasst eine drehfest auf einer Motorwelle 7 sitzende erste, kleine Riemenscheibe 8, die über einen Riemen 9, vorzugsweise einem Zahnriemen, mit einer zweiten, großen Riemenscheibe 10 gekoppelt ist. Die zweite Riemenscheibe 10 sitzt drehfest auf einer Zwischenwelle 11.

Mit axialem Abstand zu der zweiten Riemenscheibe 10 ist die Zwischenwelle 11 als Schnecke ausgebildet, weist also einen Schneckenabschnitt 12 auf. Der Schneckenabschnitt 12 kämmt mit einem Schneckenrad 13. Das Schneckenrad 13 sitzt drehfest auf der Abtriebswelle und treibt diese an. Das Drehmoment des Elektromotors 2 wird demnach über die Motorwelle 7 mit erster Riemenscheibe 8 auf die Zwischenwelle 11 bzw. auf die drehfest mit der Zwischenwelle 11 verbundene zweite Riemenscheibe 10 und von dem Schneckenabschnitt 12 der Zwischenwelle 11 auf das drehfest mit der Abtriebswelle 4 verbundene Schneckenrad 13 und damit auf die Abtriebswelle, insbesondere die Lenkwelle, übertragen.

Das in Fig. 1 linke Ende der Zwischenwelle 11 ist mittels eines Wälzlagers 14 drehbar gelagert. Das rechte Ende der Zwischenwelle 11 ist radial sowie axial mittels eines Kugellagers 15 gelagert. Das Wälzlager 14 weist einen koaxial zur Längsachse 16 der Zwischenwelle 11 angeordneten starren ersten Fortsatz 17 auf. Analog weist das Kugellager 15 einen koaxial zur Längsachse 16 angeordneten, in eine dem ersten Fortsatz 17 entgegengesetzte Richtung weisenden, zweiten Fortsatz 18 auf. Erster und zweiter Fortsatz 17, 18 dienen zur Fixierung des Wälzlagers 14 bzw. des Kugellagers 15 und damit der Zwischenwelle 11. Der erste Fortsatz 17 ist mit vollumfänglichem Radialspiel durch eine Öffnung 19 in einem ersten Gehäuseteil 20 des Lenk-Hilfsantriebs 1 geführt. Analog.dazu ist der zweite Fortsatz 18 mit vollumfänglichem Radialspiel durch eine zweite Öffnung 21 in einem zweiten Gehäuseteil 22 geführt. Beide Fortsätze 17, 18 sind an ihrem freien Ende mit jeweils einem Außengewinde 23, 24 versehen. Das Wälzlager 14 liegt mit einem Radialabschnitt 25 an der Innenseite des ersten Gehäuseteils 20 an. Auf der Außenseite des ersten Gehäuseteils 20 ist eine Scheibe 26 angeordnet, die auf den ersten Fortsatz 17 aufgeschoben ist und an dem Gehäuseteil 20 von außen anliegt. Auf das Außengewinde 23 des ersten Fortsatzes 17 ist eine erste Mutter 27 aufgeschraubt, die das Wälzlager 14 der Zwischenwelle 11 gegen das erste Gehäuseteil 20 axial verspannt. In analoger Weise ist das Kugellager 15 mit dem zweiten Gehäuseteil 22 axial verspannt. Der zweite Fortsatz 18 ist durch die zweite Öffnung 21 des zweiten Gehäuseteils 22 hindurchgeführt. Von außen ist eine zweite Scheibe 28 in axialer Richtung aufgeschoben. Die axiale Verspannung erfolgt mittels einer zweiten Mutter 29, die auf das Außengewinde 24 des zweiten Fortsatzes 18 aufgeschraubt ist das Kugellager 18 axial gegen das Gehäuseteil 22 spannt.

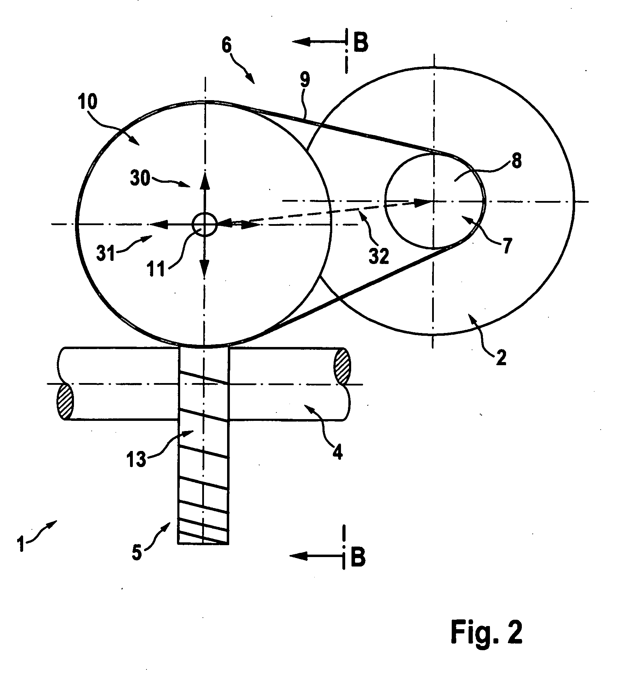

Nach Lösen der beiden Muttern 27, 29 kann die Zwischenwelle 11 entlang der in Fig. 2 eingezeichneten Radialrichtungen 30, 31 verschoben werden, wodurch der Abstand 32 zwischen der Zwischenwelle 11 und der Motorwelle 7 und damit die Vorspannung des Riemens 9 verändert werden. Gleichzeitig wird die Zwischenwelle 11 relativ zu dem Schneckenrad 13 verstellt, wodurch das Zusammenwirken von Schneckenabschnitt 12 und Schneckenrad 13, insbesondere im Hinblick auf eine geringe Geräuschentwicklung optimiert werden kann.

Das Verschieben der Zwischenwelle 11 erfolgt mittels einer schematisch dargestellten Wellenverschiebeeinrichtung 33 mit zwei in axialer Richtung beabstandeten Verstellarmen 34, 35. Die Verstellarme 34, 35 greifen seitlich axial in Zentrierbohrungen der Fortsätze 17,18 mit konischen Spitzen ein. Jedem Verstellarm 34, 35 sind nicht dargestellte Messfühler zur Messung der jeweiligen Verstellkraft zugeordnet. Die Verstellkräfte werden vor der Verstellung auf Basis der Soll-Riemenkräfte und der aufgrund dieser auf die Zwischenwelle wirkenden Drehmomente bestimmt. Die Messfühler sind möglichst unmittelbar benachbart zur Achse 11 platziert. Die Wellenverschiebeeinrichtung 33 bzw. die Verstellarme 34, 35 werden nun so lange verstellt, bis die vorher ermittelten Verstellkräfte bzw. die Riemenkräfte an den Verstellarmen 34, 35 anliegen. Die Verstellarme 34, 35 können unabhängig voneinander mittels mindestens eines nicht dargestellten Elektromotors verstellt werden. Gemäß einer Alternative ist es denkbar, dass die beiden Verstellarme 34, 35 nur gemeinsam verstellbar sind. Ebenfalls ist es denkbar, dass die Verstellarme 34, 35 nicht axial in die Fortsätze 17, 18 eingreifen, sondern seitlich an der Zwischenwelle 11 oder einem mit der Zwischenwelle verbundenen Bauteil angreifen. Ebenso ist es denkbar, nur einen einzigen Verstellarm vorzusehen, der die Zwischenwelle 11 beim Verstellen derart hält, dass diese nicht in radialer Richtung verkippen kann. Nach Erreichen der gewünschten Verstellposition, also nach Anliegen der gewünschten Verstellkraft in die vorbestimmte Kraftrichtung werden die Muttern 27, 29 angezogen und die so gefundene Einstellposition fixiert. Alternativ kann das Fixieren auch durch Schweißen, Verformen, etc. geschehen.

## Patentansprüche

1. Lenk-Hilfsantrieb für eine Lenkung in einem Kraftfahrzeug, mit einem eine Motorwelle (7) antreibenden Motor (2) und mit einem zwischen Motorwelle (7) und einer Abtriebswelle (4) angeordneten kombiniertes Schnecken-, Riemengetriebe (3),
**dadurch gekennzeichnet,**
**dass** das Getriebe (3) eine zur Justierung verstellbare und als Schnecke ausgebildete Zwischenwelle (11) umfasst.

2. Lenk-Hilfsantrieb nach Anspruch 1,
**dadurch gekennzeichnet,**
**dass** auf Motorwelle (7) drehfest eine erste Riemenscheibe (8) angeordnet ist, die mittels eines Riemens (9) antreibend mit einer drehfest auf der Zwischenwelle (11) angeordneten zweiten Riemenscheibe (10) gekoppelt ist.

3. Lenk-Hilfsantrieb nach Ansprüche 1 oder 2,
**dadurch gekennzeichnet,**
**dass** die Schnecke mit einem drehfest auf der Abtriebswelle (4) angeordneten Schneckenrad (13) kämmt.

4. Lenk-Hilfsantrieb nach einem der Ansprüche 1 bis 3,
**dadurch gekennzeichnet,**
**dass** die Zwischenwelle (11) parallel zur Motorwelle (7) angeordnet ist und die Abtriebswelle (4) quer zur Zwischenwelle (11) und zur Motorwelle (7) verläuft.

5. Lenk-Hilfsantrieb nach einem der vorhergehenden Ansprüche, **dadurch gekennzeichnet,**
**dass** die Zwischenwelle (11) relativ zu der Motorwelle (7) und
der Abtriebswelle (11) verstellbar und in gewünschter Relativposition fixierbar ist.

6. Lenk-Hilfsantrieb nach einem der vorhergehenden Ansprüche, **dadurch gekennzeichnet,**
**dass** die Zwischenwelle (11) oder mindestens ein Wellenlager (14, 15) der Zwischenwelle (11) mit vollumfänglichem Radialspiel in mindestens einer Aufnahmeöffnung in mindestens einem Bauteil (20, 22) aufgenommen ist.

7. Lenk-Hilfsantrieb nach einem der vorhergehenden Ansprüche, **dadurch gekennzeichnet,**
**dass** Motorwelle (7) und Abtriebswelle (4) in einer festen, nicht verstellbaren Relativposition zueinander angeordnet sind.

8. Lenk-Hilfsantrieb nach einem der Ansprüche,
**dadurch gekennzeichnet,**
**dass** die Zwischenwelle (11) ausschließlich aufgrund axialer Verspannung gegen mindestens ein Bauteil (20, 22) fixierbar ist.

9. Verfahren zum Justieren eines kombinierten Schnecken-, Riemengetriebes (3) eines Lenk-Hilfsantriebs (1) für ein Kraftfahrzeug,
**dadurch gekennzeichnet,**
**dass** bei dem Verfahren des in den Ansprüchen 1 bis 8 beschriebenen Getriebes, durch alleiniges Verstellen der Zwischenwelle (11) relativ zur Motorwelle (7)und der Abtriebswelle (4), justiert wird.

10. Verfahren nach Anspruch 9,
**dadurch gekennzeichnet,**
**dass** die Zwischenwelle (11) zur Justierung des Riemengetriebes durch Beaufschlagen mit einer definierten Verstellkraft in eine definierte Kraftrichtung oder um einen vorgegebenen Weg verstellt wird.

11. Verfahren nach Anspruch 9,
**dadurch gekennzeichnet,**
**dass** die Zwischenwelle (11) zur Justierung des Schneckengetriebes um einen vorgegebenen Weg verstellt wird.

12. Verfahren nach Anspruch 10,
**dadurch gekennzeichnet,**
**dass** die Verstellkraft während des Verstellvorgangs gemessen wird und dass der Verstellvorgang bei Erreichen der definierten Verstellkraft angehalten und die Zwischenwelle (11) fixiert wird.

13. Verfahren nach einem der Ansprüche 9 bis 11,
**dadurch gekennzeichnet,**
**dass** die Zwischenwelle (11) mit einer eigenständigen Wellenverschiebeeinrichtung (33) verstellt wird.

## Claims

1. Power-steering drive for a steering system in a motor vehicle, having a motor (2) driving a motor shaft (7), and having a combined worm-belt transmission (3) arranged between the motor shaft (7) and an output shaft (4), **characterized in that** the transmission (3) comprises an adjustable intermediate shaft (11) designed as a worm.

2. Power-steering drive according to Claim 1, **characterized in that** a first belt pulley (8) is arranged on the motor shaft (7) in a rotatably fixed manner, and a second belt pulley (10) arranged in a rotatably fixed manner on the intermediate shaft (11) is coupled to it by means of a belt (9).

3. Power-steering drive according to Claim 1 or 2, **characterized in that** the worm engages with a worm wheel (13) arranged in a rotatably fixed manner on the output shaft (4).

4. Power-steering drive according to any of Claims 1 to 3, **characterized in that** the intermediate shaft (11) is arranged in parallel to the motor shaft (7) and the output shaft (4) extends transversely to the intermediate shaft (11) and to the motor shaft (7).

5. Power-steering drive according to any of the preceding claims, **characterized in that** the
intermediate shaft (11) is adjustable relative to the motor shaft (7) and the output shaft (4) and is fixable in a desired relative position.

6. Power-steering drive according to any of the preceding claims, **characterized in that** the intermediate shaft (11) or at least one shaft bearing (14, 15) of the intermediate shaft (11) is received, with radial play around the entire periphery, in at least one receiving opening in at least one component (20, 22).

7. Power-steering drive according to any of the preceding claims, **characterized in that** the motor shaft (7) and the output shaft (4) are arranged in a fixed, non-adjustable relative position with respect to each other.

8. Power-steering drive according to any of preceding the claims, **characterized in that** the intermediate shaft (11) is fixable exclusively on the basis of being braced axially against at least one component (20, 22).

9. Method for adjusting a combined worm-belt transmission (3) of a power-steering drive (1) for a motor vehicle, **characterized in that** in the method of the transmission described in Claims 1 to 8 an adjustment is carried out by solely adjusting the intermediate shaft (11) relative to the motor shaft (7) and the output shaft (4).

10. Method according to Claim 9, **characterized in that** in order to adjust the belt transmission the intermediate shaft (11) is adjusted by applying a defined adjusting force in a defined direction of force or by a predetermined travel.

11. Method according to Claim 9, **characterized in that** in order to adjust the worm transmission the intermediate shaft (11) is adjusted by a predetermined travel.

12. Method according to Claim 10, **characterized in that** the adjusting force is measured during the adjusting process and **in that** the adjusting process when the defined adjusting force is reached is stopped and the intermediate shaft (11) is fixed.

13. Method according to any of Claims 9 to 11, **characterized in that** the intermediate shaft (11) is adjusted using an independent shaft shifting device (33).

## Revendications

1. Direction assistée pour une direction de véhicule automobile, comprenant un moteur (2) entraînant un arbre de moteur (7) et une transmission à courroie et vis sans fin (3) combinée disposée entre l'arbre de moteur (7) et un arbre de sortie (4),
**caractérisée en ce que**
la transmission (3) comprend un arbre intermédiaire (11) déplaçable en vue d'un ajustement et réalisé sous forme de vis sans fin.

2. Direction assistée selon la revendication 1, **caractérisée en ce que**
l'on dispose sur l'arbre de moteur (7), de manière solidaire en rotation, une première poulie à courroie (8), qui est accouplée, avec entraînement au moyen d'une courroie (9), à une deuxième poulie à courroie (10) disposée de manière solidaire en rotation sur l'arbre intermédiaire (11).

3. Direction assistée selon la revendication 1 ou 2, **caractérisée en ce que**
la vis sans fin s'engrène avec une roue à denture hélicoïdale (13) disposée de manière solidaire en rotation sur l'arbre de sortie (4).

4. Direction assistée selon l'une quelconque des revendications 1 à 3,
**caractérisée en ce que**
l'arbre intermédiaire (11) est disposé parallèlement à l'arbre de moteur (7), et l'arbre de sortie (4) s'étend transversalement à l'arbre intermédiaire (11) et à l'arbre de moteur (7).

5. Direction assistée selon l'une quelconque des revendications précédentes,
**caractérisée en ce que**
l'arbre intermédiaire (11) peut être réglé par rapport à l'arbre de moteur (7) et à l'arbre de sortie (4) et peut être fixé dans une position relative souhaitée.

6. Direction assistée selon l'une quelconque des revendications précédentes,
**caractérisée en ce que**
l'arbre intermédiaire (11) ou au moins un palier d'arbre (14, 15) de l'arbre intermédiaire (11) est reçu avec un jeu radial sur toute la périphérie dans au moins une ouverture de réception dans au moins un composant (20, 22).

7. Direction assistée selon l'une quelconque des revendications précédentes,
**caractérisée en ce que**
l'arbre de moteur (7) et l'arbre de sortie (4) sont disposés l'un par rapport à l'autre dans une position relative fixe non réglable.

8. Direction assistée selon l'une quelconque des revendications précédentes,
**caractérisée en ce que**
l'arbre intermédiaire (11) peut être fixé contre au moins un composant (20, 22) exclusivement par contrainte axiale.

9. Procédé d'ajustement d'une transmission à courroie et vis sans fin (3) combinée d'une direction assistée (1) pour un véhicule automobile,
**caractérisé en ce que**
lors du procédé d'ajustement de la transmission décrite dans les revendications 1 à 8, l'ajustement est effectué par simple réglage de l'arbre intermédiaire (11) par rapport à l'arbre de moteur (7) et l'arbre de sortie (4).

10. Procédé selon la revendication 9,
**caractérisé en ce que**
l'arbre intermédiaire (11) pour l'ajustement de la transmission à courroie est réglé par sollicitation avec une force de réglage définie dans une direction de force définie ou sur une course prédéfinie.

11. Procédé selon la revendication 9,
**caractérisé en ce que**
l'arbre intermédiaire (11) pour l'ajustement de la transmission à vis sans fin, est réglé sur une distance prédéfinie.

12. Procédé selon la revendication 10,
**caractérisé en ce que**
la force de réglage est mesurée pendant l'opération de réglage et **en ce que** l'opération de réglage est maintenue une fois la force de réglage définie atteinte, et l'arbre intermédiaire (11) est fixé.

13. Procédé selon l'une quelconque des revendications 9 à 11,
**caractérisé en ce que**
l'arbre intermédiaire (11) est réglé à l'aide d'un dispositif de déplacement d'arbre (33) autonome.
